# EUROPEAN PATENT APPLICATION

(11) **EP 1 898 529 A1**
(43) Date of publication of application: **12.03.2008**
(21) Application number: 06756468.2
(22) Date of filing: 23.05.2006
(51) Int. Cl.: H04B 1/10, H04B 1/26

(54) **BROADCAST RECEIVING APPARATUS, INTERFERENCE DETECTING APPARATUS AND INTERFERENCE DETECTING METHOD**

(30) Priority: 28.06.2005 JP 2005188407
(71) Applicant: Pioneer Corporation, Tokyo 153-8654 (JP)
(72) Inventor: TAKAHASHI, Kazuhiko Pioneer Corporation, Kawagoe-shi Saitama 3508555 (JP); KOBAYASHI, Terukazu Pioneer Corporation, Kawagoe-shi Saitama 3508555 (JP)
(74) Representative: HOFFMANN EITLE
(86) International application number: PCT/JP2006/310212
(87) International publication number: WO 2007/000860

(57) **Abstract**

To form structure that can remove an adjacent undesired-wave signal such that it is possible to produce a simpler and lower-cost device having the structure. The device includes a front-end unit 2 that converts a signal coming from a target broadcast station into an IF signal, an IF filter 4 that filters the IF signal by using a predetermined bandpass filter and outputs filtered signal, a D/U-ratio output unit 5 that generates a signal indicative of an intensity ratio of a desired-wave signal to a undesired-wave signal from an output signal containing the desired-wave signal and the undesired-wave signal and outputs generated signal, a comparing controlling unit 6 that outputs a comparison result indicative of a comparison of output of the D/U-ratio output unit 5 with a threshold. The D/U-ratio output unit 5 includes an IF limiter that limits attenuation of an input signal.

## Description

### TECHNICAL FIELD

The present invention relates to a broadcast receiving device, an interference detecting device, and an interference detecting method.

### BACKGROUND ART

In a typical broadcast receiver, when receiving a signal having a desired frequency (hereinafter, "desired-wave signal"), if a broadcasting station is present nearby that employs a frequency adjacent to the desired-wave signal, reception quality deteriorates due to an effect of a signal having the adjacent frequency. To prevent such deterioration of reception quality due to an effect of a signal (hereinafter, "undesired-wave signal") having a frequency adjacent to the frequency of the desired-wave signal, the broadcast receiving device is provided with a function of removing the undesired-wave signal when detecting the undesired-wave signal.

The adjacent-interference detecting device disclosed in below-described Patent document 1 relates to a technique for removing the undesired-wave signal. Patent document 1 teaches to provide an adjacent-interference detecting unit at a stage subsequent to a front-end unit. This configuration allows accurate detection of occurrence of an interference station with respect to a D/U ratio (ratio of a level of a desired-wave signal to a level of an undesired-wave signal) in a wider range even under conditions where intermodulation can occur. Specifically, the adjacent-interference detecting unit includes a first adjacent-interference detecting unit, a second adjacent-interference detecting unit, and a D/U-ratio determining unit. The first adjacent-interference detecting unit calculates a difference between a signal that has passed through a wide-bandpass filter having a frequency of the desired-wave signal as its center frequency and a signal that has passed through a narrow-bandpass filter having a frequency of the desired-wave signal as its center frequency. The second adjacent-interference detecting unit calculates a sum of output of a filter that allows to pass through components of the undesired-wave signal lower than the desired-wave signal and output of another filter that allows to pass through components of the undesired-wave signal higher than the desired-wave signal. Finally, the D/U detects the undesired-wave signal based on output of the first adjacent-interference detecting unit when an intensity ratio of the desired-wave signal to the undesired-wave signal is equal to or lower than a threshold, and detects the undesired-wave signal based on output of the second adjacent-interference detecting unit when the intensity ratio of the desired-wave signal to the undesired-wave signal is higher than the threshold.

Patent document 1: Japanese Patent Application Laid-open No. 2003-174373

### DISCLOSURE OF INVENTION

### PROBLEM TO BE SOLVED BY THE INVENTION

The adjacent-interference detecting device disclosed in the Patent document 1 has been configured to remove the undesired-wave signal based on control parameters including not only a signal intensity of the undesired-wave signal but also the D/U ratio containing a signal intensity of the desired-wave signal. This is because there is a request for "deciding an influence level on the desired-wave signal from the adjacent undesired-wave signal depending on not only a signal intensity of the undesired-wave signal but also the D/U ratio".

However, because the adjacent-interference detecting device disclosed in the Patent document 1 requires a plurality of narrow-bandpass filters for filtering output of the front-end unit to obtain an accurate D/U ratio, there existed a problem that the structure of the' device became complicated and costly.

The present invention has been achieved to solve the above problems in the conventional technology and it is an object of the present invention to provide a broadcast receiving device, an interference detecting device, and an interference detecting method that can remove the adjacent undesired-wave signal while reducing costs and hardware size.

### MEANS FOR SOLVING PROBLEM

According to claim 1 of the present invention, there is provided an interference detecting device including a D/U-ratio output unit that generates a signal indicative of a ratio of intensities of a desired-wave signal to an undesired-wave signal from a signal output containing the desired-wave signal and the undesired-wave signal, and outputs generated signal; and a comparing controlling unit that outputs a comparison result indicative of a comparison of output of the D/U-ratio output unit with a threshold, wherein the D/U-ratio output unit includes an amplitude limiting circuit that limits amplitude of an input signal.

According to claim 3 of the present invention, there is provided a broadcast receiving device including a front-end unit that converts a desired-wave signal, which is a signal coming from a target broadcast station, to a signal having a frequency in a predetermined frequency bandwidth; an undesired-wave signal control unit that extracts signal characteristics of the desired-wave signal and signal characteristics of an undesired-wave signal that is present near the desired-wave signal from an output signal of the front-end unit, and generates a predetermined control signal based on the signal characteristics, and outputs the control signal; and a filter unit that filters the output signal of the front-end unit by using a predetermined bandpass filter, and outputs filtered signal, wherein the undesired-wave signal control unit includes a D/U-ratio output unit that generates a signal indicative of a ratio of intensities of the desired-wave signal to the undesired-wave signal from an output signal containing the desired-wave signal and the undesired-wave signal, and outputs generated signal; and a comparing controlling unit that outputs a comparison result indicative of a comparison of output of the D/U-ratio output unit with a threshold as the control signal, wherein the D/U-ratio output unit includes an amplitude limiting circuit that limits amplitude of an input signal.

According to claim 5 of the present invention, there is provided an interference detecting method including a limited-amplitude generating and outputting step of generating limited-amplitude output by limiting amplitude of an input signal containing a desired-wave signal and an undesired-wave signal, and outputting generated signal; a D/U-ratio outputting step of generating a signal indicative of a ratio of intensities of the desired-wave signal to the undesired-wave signal from signal output at the limited-amplitude generating and outputting step, and outputting generated signal; and a comparing step of outputting a comparison result indicative of a comparison of output at the D/U-ratio outputting step with a threshold.

### BRIEF DESCRIPTION OF DRAWINGS

[Fig. 1] Fig. 1 is a block diagram for explaining the structure of a broadcast receiving device that includes an undesired-wave signal control unit according to a first embodiment of the present invention.
[Fig. 2] Fig. 2 is a graph for explaining the characteristic of rectified output of a rectifying circuit 10 shown in Fig. 1.
[Fig. 3] Fig. 3 is a block diagram for explaining the structure of an IF filter 4 shown in Fig. 1.
[Fig. 4] Fig. 4 is a flowchart for explaining a procedure for selecting a filter characteristic of the IF filter 4.
[Fig. 5] Fig. 5 is a block diagram for explaining the structure of a broadcast receiving device including an undesired-wave signal control unit according to a second embodiment of the present invention.
[Fig. 6] Fig. 6 is a graph for explaining the characteristic of rectified output of a rectifying circuit 10 shown in Fig. 5.

### EXPLANATIONS OF LETTERS OR NUMERALS

- 1: Receiving antenna
- 2: Front-end unit
- 3: IF signal
- 4: IF filter
- 5: D/U-ratio output unit
- 6: Comparing controlling unit
- 7: Filter-selection signal
- 8: IF limiter
- 9: Adjacent-frequency extracting BPF
- 10: Rectifying circuit
- 11: Notch filter
- 12: Front-end unit
- 40: Switching switch
- 41, 42, 43,: Filter characteristic

### BEST MODE(S) FOR CARRYING OUT THE INVENTION

Exemplary embodiments of the present invention are described in detail below. An interference detecting device according to any one of the exemplary embodiments includes a D/U-ratio output unit that generates and outputs a signal indicative of intensity ratio of a desired-wave signal to an undesired-wave signal from an output signal containing the desired-wave signal and the undesired-wave signal, and a comparing controlling unit that outputs a comparison result indicative of comparison of output of the D/U-ratio output unit and a threshold. The D/U-ratio output unit includes an amplitude limiting circuit for limiting amplitude of an input signal.

Because the amplitude limiting circuit provided in the D/U-ratio output unit is a nonlinear circuit, the embodiments of the present invention take advantage of a capture effect, which is one of characteristics of nonlinear circuits. Because of the capture effect, the D/U-ratio output unit can output an output indicative of the D/U ratio, which is a ratio of a level of the desired-wave signal to a level of the undesired-wave signal.

A limiter can be used as the amplitude limiting circuit. In contrast to the conventional technique that requires a plurality of narrow-bandpass filters, the embodiments require only a single limiter. Moreover, use of the limiter makes it possible to reduce the circuit scale. As a result, the structure (equivalent structure) for obtaining the D/U ratio can be made in a simple manner.

Moreover, a D/U-ratio output unit in an interference detecting device according to another embodiment of the present invention includes a bandpass attenuating filter for attenuating components of the desired-wave signal contained in the input signal. The bandpass attenuating filter is located at an input side of the amplitude limiting circuit.

By inserting a band-pass attenuating filter into an input side of the amplitude limiting circuit, it is possible to output from the D/U-ratio output unit an output indicative of the D/U ratio even when the D/U ratio varies in a wide range.

A notch filter can be used as the bandwidth attenuating filter. Because it is sufficient to insert a single notch filter into the input side of the amplitude limiting circuit, the structure (equivalent structure) for obtaining the D/U ratio can be made in a simple manner.

Moreover, by using the interference detecting device as the undesired-wave signal control unit, it is possible to produce the broadcast receiving device including a front-end unit that converts a signal coming from a target broadcast station into a signal having a predetermined frequency bandwidth (for example, an IF signal) and a filter unit (for example, an IF filter) that filters the output signal coming from the front-end unit by using a predetermined bandpass filter. Such a broadcast receiving device can obtain a similar effect that can be obtained with the interference detecting device.

Furthermore, the interference detecting method according to the exemplary embodiments of the present invention,includes a limited-amplitude generating/outputting step of generating limited-amplitude output that is generated by limiting amplitude of an input signal containing the desired-wave signal and the undesired-wave signal, a D/U-ratio outputting step of generating a signal representing an intensity ratio of the desired-wave signal to the undesired-wave signal based on the signal output at the limited-amplitude generating/outputting step and outputting the generated signal, and a comparing step of outputting a comparison result indicative of a comparison of output at the D/U-ratio outputting step with a predetermined threshold. Those processes are more effective when the input signal is in the form of a digital signal. The above-described processes can be executed by using an arbitrary signal processing unit or an information processing unit.

Moreover, if a desired-wave signal component attenuating step of attenuating components of the desired-wave signal, out of the input signal containing the desired-wave signal and the undesired-wave signal, by a predetermined amount is performed prior to the limited-amplitude generating/outputting step, the D/U-ratio output unit can output an output indicative of the D/U ratio even when the D/U ratio varies in a wide range.

### Embodiments

Exemplary embodiments of the present invention are described in detail below with reference to the accompanying drawings.

### (First embodiment)

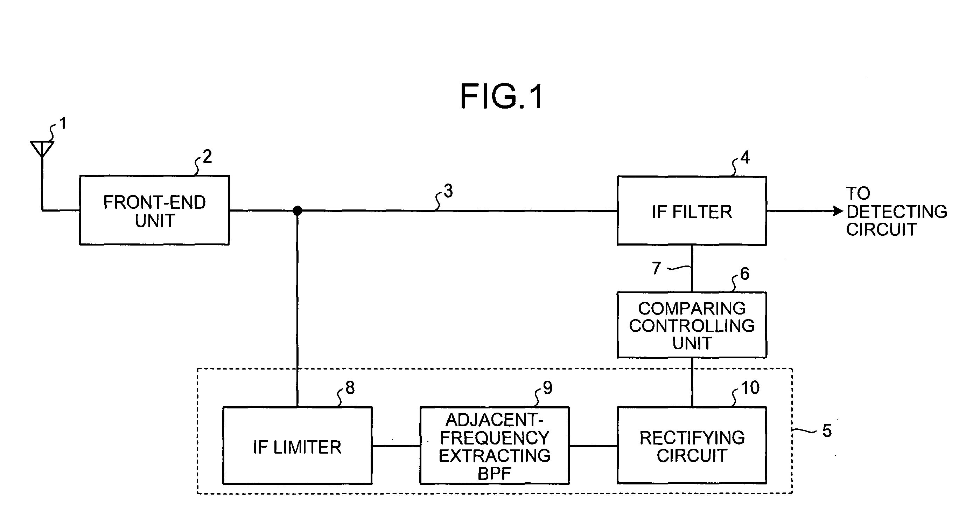

A broadcast receiving device according to a first embodiment of the present invention is explained below. Fig. 1 is a block diagram for explaining the structure of the broadcast receiving device that includes an undesired-wave signal control unit according to the first embodiment of the present invention.

### [Structure according to first embodiment]

As shown in Fig. 1, the broadcast receiving device includes a receiving antenna 1, a front-end unit 2, an IF filter 4, a D/U-ratio output unit 5 that outputs an intensity ratio of the desired-wave signal to the undesired-wave signal (hereinafter, "D/U ratio"), and a comparing controlling unit 6. The D/U-ratio output unit 5 includes an IF limiter 8, an adjacent-frequency extracting bandpass filter (hereinafter, "BPF") 9, and a rectifying circuit 10. Both of the D/U-ratio output unit 5 and the comparing controlling unit integrally form the undesired-wave signal control unit.

### [Operation of broadcast receiving device]

Operation of the broadcast receiving device according to the first embodiment is explained. The front-end unit 2 shown in Fig. 1 selects, for example, a signal coming from a target broadcast station out of signals that are received via the receiving antenna 1, and outputs an IF signal 3 that is a processed signal generated by amplifying and converting a frequency of the selected signal. The IF filter 4 selects a filter (bandpass filter) having later-described filter characteristic depending on a filter-selection signal 7 received from the comparing controlling unit 6, and causes the selected filter to perform a filtering process on the IF signal 3. Output of the filter is sent to a unit, for example, a detecting circuit (not shown) that is provided at a step subsequent to the IF filter 4.

A part of the IF signal 3 is sent to the IF limiter 8 of the D/U-ratio output unit 5. The part of the IF signal 3 that is received by the IF limiter 8 is the signal output from the front-end unit 2, that is, a superposed signal with the desired-wave signal and the adjacent undesired-wave signal superposed over each other. The IF limiter 8 is a linear circuit that limits amplitude of the received IF signal 3, it is possible to take advantage of the capture effect, which is one of the characteristics of linear circuits.

Given below is a simple description of the above-described capture effect. The capture effect is a phenomenon that a signal having a larger amplitude (hereinafter, "large signal") and another signal having a smaller amplitude (hereinafter, "small signal") are received together and are amplified together, the degree to which the small signal is amplified is suppressed due to an influence of the large signal. The degree that is affected due to the capture effect, i.e., the degree to which the amplification of the small signal is suppressed due to the influence of the large signal depends on the relative levels (ratio of levels) of the small signal and the large signal. This theory can be applied to the embodiments of the present invention. In other words, output of an undesired-wave signal (or, output of desired-wave signal) indicative of the D/U ratio, i.e., a ratio of a level of the desired-wave signal to a level of the undesired-wave signal, can be obtained.

Returning to Fig. 1, the adjacent-frequency extracting BPF 9 extracts the undesired-wave signal (adjacent undesired-wave signal), and sends to the rectifying circuit 10. Rectified output is obtained in the rectifying circuit 10 corresponding to a level of the undesired-wave signal that is output of the adjacent-frequency extracting BPF 9. The comparing controlling unit 6 compares the rectified output with a later-described threshold, and outputs the filter-selection signal 7 based on a magnitude relation as a result of the comparison. As is described above, the IF filter 4 selects an appropriate filter based on the filter-selection signal 7 received from the comparing controlling unit 6.

### [Level of rectified output of rectifying circuit]

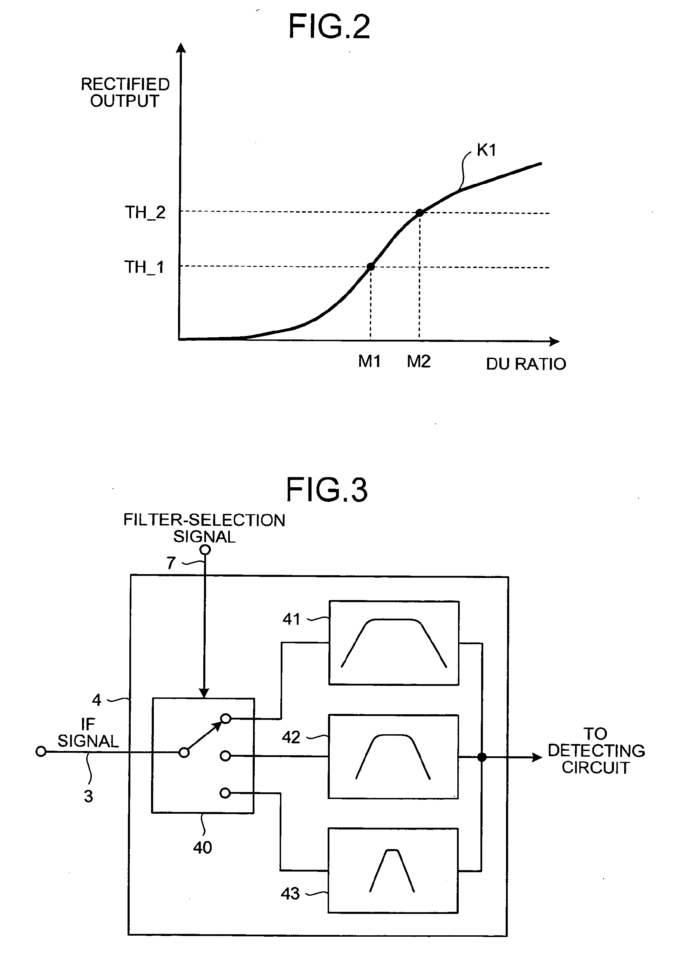

Fig. 2 is a graph for explaining the characteristic of the rectified output of the rectifying circuit 10 shown in Fig. 1. The horizontal axis represents the D/U ratio, and the vertical axis represents the characteristic of the rectified output of the rectifying circuit 10 with respect to the D/U ratio in Fig. 2. As shown in the figure, the filter characteristic show a change at around the D/U ratio of "M1" (where M1 is a positive real value). The filter characteristic show another change at around the D/U ratio of "M2" (where M2 is a positive real value that satisfies M2>M1). In a control performed by the comparing controlling unit 6, not the D/U ratio but the rectified output indicative of the D/U ratio is used as a threshold. That is, the threshold is determined to be "TH_1", which corresponds to the D/U ratio of "M1", or "TH_2", which corresponds to the D/U ratio of "M2". The filter characteristic is selected, as described later, based on the filter-selection control signal that is generated based on the determined threshold.

### [Filter Structure of IF Filter 4]

Fig. 3 is a block diagram for explaining the structure of the IF filter 4 shown in Fig. 1. The IF filter 4 shown in Fig. 3 includes a filter characteristic 41 that is a wide-bandpass filter, a filter characteristic 42 that is an intermediate-bandpass filter, and a filter characteristic 43 that is a narrow-bandpass filter. The IF signal 3 that is input to the IF filter 4 is connected to a target filter via a switch 40 controlled based on the filter-selection signal 7, and the filtered output is output to the detecting circuit (not shown).

### [Procedure for selecting filter characteristic of IF Filter 4]

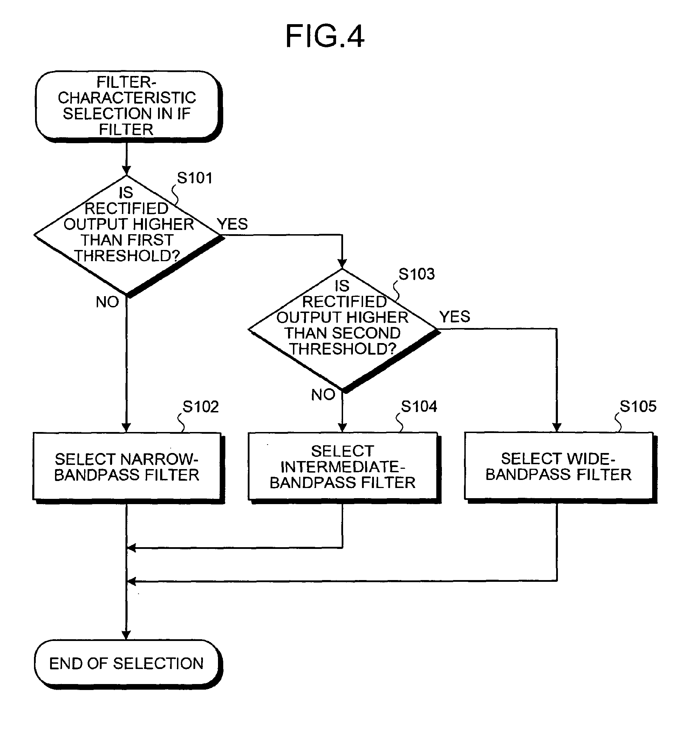

A procedure for selecting a filter characteristic of the IF filter 4 is explained with reference to Figs. 1 to 4. Fig. 4 is a flowchart for explaining the procedure for selecting a filter characteristic of the IF filter 4 depending on the filter selection control signal 7.

First, the rectified output of the rectifying circuit is sent to the comparing controlling unit 6. Then, the comparing controlling unit 6 determines whether the rectified output is higher than a first threshold (e.g., TH_1 shown in Fig. 2) (step S101). If the rectified output is not higher than the first threshold (No at step S101), a narrow-bandpass filter (e.g., the filter characteristic 43 shown in Fig. 3) is selected (step S102). If the rectified output is higher than the first threshold (Yes at step S101), it is determined whether the rectified output is higher than a second threshold (e.g., TH_2 shown in Fig. 2) (step S103). If the rectified output is not higher than the second threshold (No at step S103), an intermediate-bandpass filter (e.g., the filter characteristic 42 shown in Fig. 3) is selected (step S104). If the rectified output is higher than the second threshold (Yes at step S103), a wide-bandpass filter (e.g., the filter characteristic 41 shown in Fig. 3) is selected (step S105), and the filter-selection flow performed by the IF filter 4 goes to end.

In the broadcast receiving device including the undesired-wave signal control unit according to the first embodiment, because IF output of the front-end unit 2 is sent to the IF limiter 8, and output of the IF limiter 8 is sent to the rectifying circuit via the adjacent-frequency extracting BPF 9, it is possible to take advantage of the capture effect obtained by the IF limiter 8. This is why the rectified output of the rectifying circuit 10 represents the undesired-wave signal indicative of the D/U ratio of the signal wave to the undesired-wave signal contained in the IF signal. As a result, performing the filter control based on the rectified output of the rectifying circuit 10 is equivalent to performing the filter control of the IF filter 4 based on the D/U ratio, which makes it possible to satisfy the request for "deciding an influence level on the desired-wave signal from the adjacent undesired-wave signal depending on not only a signal intensity of the undesired-wave signal but also the D/U ratio". Moreover, because a complicated structure is not adapted that includes a plurality of narrow-bandpass filters for filtering output of the front-end unit as in the conventional interference detecting device, is has become possible to obtain the D/U ratio with a simpler structure (equivalent structure).

According to the present embodiment, a process of detecting interference is performed in an IF bandwidth. However, it is possible to perform the above-described processes in any bandwidth other than the IF bandwidth by using a limiter appropriate for a target bandwidth such as an RF bandwidth or a baseband bandwidth.

Moreover, the IF filter 4 in the present embodiment can be either a digital filter or an analog filter. The important point is that an appropriate filter characteristic of the IF filter 4 is controlled based on the output of the comparing controlling unit 6.

Furthermore, although it is described while assuming that the process performed by the D/U-ratio output unit 5 is an analog process, the process can be performed as digital processing. When the process is performed as digital processing, A/D converted output, which is generated by converting IF output of the front-end unit 2 into an A/D signal, is sent to the D/U-ratio output unit 5.

As set forth hereinabove, according to the present embodiment, because there are provided a front-end unit that converts a desired-wave signal, which is a signal coming from a target broadcast station, to a signal having a frequency in a predetermined frequency bandwidth; an undesired-wave signal control unit that extracts signal characteristics of the desired-wave signal and signal characteristics of an undesired-wave signal that is present near the desired-wave signal from an output signal of the front-end unit, and generates a predetermined control signal based on the signal characteristics, and outputs the control signal; and a filter unit that filters the output signal of the front-end unit by using a predetermined bandpass filter, and outputs filtered signal, wherein the undesired-wave signal control unit includes a D/U-ratio output unit that generates a signal indicative of a ratio of intensities of the desired-wave signal to the undesired-wave signal from an output signal containing the desired-wave signal and the undesired-wave signal, and outputs generated signal; and a comparing controlling unit that outputs a comparison result indicative of a comparison of output of the D/U-ratio output unit with a threshold as the control signal, and the D/U-ratio output unit includes an amplitude limiting circuit that limits amplitude of an input signal, it is possible to form the structure that can remove the adjacent undesired-wave signal. Moreover, it helps in producing a device having a not-complicated structure with lower costs by using such structure.

### (Second embodiment)

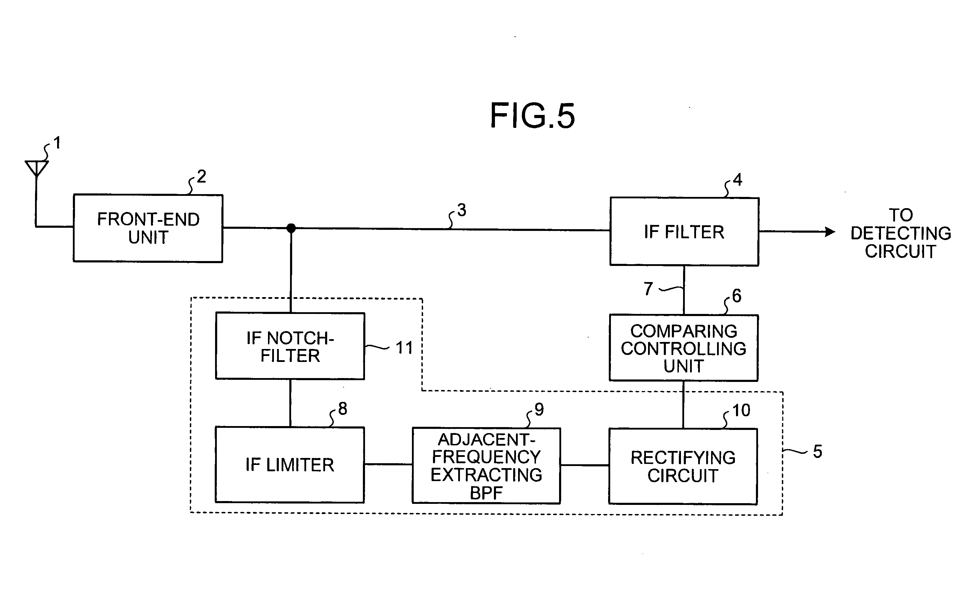

A broadcast receiving device according to a second embodiment of the present invention is explained below. Fig. 5 is a block diagram for explaining the structure of the broadcast receiving device including an undesired-wave signal control unit according to the second embodiment of the present invention.

### [Structure according to second embodiment]

The broadcast receiving device shown in Fig. 5 is, as compared to the broadcast receiving device shown in Fig. 1, characterized in that output of the front-end unit 2 is sent to the IF limiter 8 not directly but through an IF notch-filter 11. Structure other than the IF notch-filter 11 is similar or equivalent to the structure according to the first embodiment, and those components are denoted with the same numbers. Moreover, according to the embodiment, the IF notch-filter 11, the D/U-ratio output unit 5, and the comparing controlling unit 6 integrally form the undesired-wave signal control unit.

### [Operation of broadcast receiving device]

Operation of the broadcast receiving device according to the second embodiment is explained. The front-end unit 2 shown in Fig. 5 selects, for example, a signal coming from a target broadcast station out of signals that are received via the receiving antenna 1, and outputs the IF signal 3 that is a processed signal generated by amplifying and converting a frequency of the selected signal. The IF filter 4 selects a filter having a target filter characteristic depending on the filter-selection signal 7 received from the comparing controlling unit 6 in a similar manner as is described in the first embodiment, causes the selected filter to perform a filtering process on the IF signal 3, and sends to the detecting circuit (not shown) that is generally provided at a step subsequent to the IF filter 4.

A part of the IF signal 3 is sent to the IF notch-filter 11. The IF notch-filter 11 is a filter that attenuates output of the desired-wave signal while scarcely changing output of the undesired-wave signal. A filter having a predetermined filter characteristic is selected as the IF notch-filter 11 such that its center frequency is located around the center frequency of the desired-wave signal and its cutoff-frequency bandwidth excludes the undesired-wave signal.

Output of the IF notch-filter 11 is sent to the IF limiter 8 of the D/U-ratio output unit 5. The adjacent-frequency extracting BPF 9 extracts the undesired-wave signal from the output of the IF notch-filter 11 (containing components of the adjacent undesired-wave signal, and sends to the rectifying circuit 10. Rectified output is obtained in the rectifying circuit 10 corresponding to a level of the undesired-wave signal that is output of the adjacent-frequency extracting BPF 9. The comparing controlling unit 6 compares the rectified output with a later-described threshold, and outputs the filter-selection signal 7 based on a magnitude relation as a result of the comparison. The IF filter 4, selects an appropriate filter based on the filter-selection signal 7 received from the comparing controlling unit 6 in a manner similar to that as is described in the first embodiment with reference to Figs. 3 and 4. Therefore, the explanation is omitted.

### [Characteristic of rectified output of rectifying circuit]

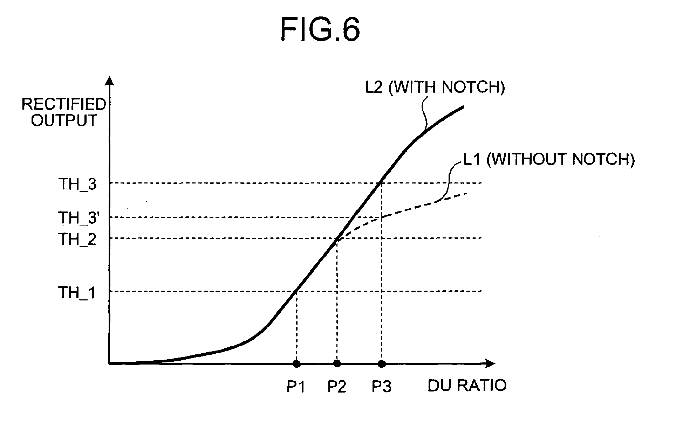

Characteristic of the rectified output of the rectifying circuit 10 when the IF notch-filter 11 is inserted is described with reference to Fig. 6. Fig. 6 is a graph for explaining the characteristic of the rectified output of the rectifying circuit 10 shown in Fig. 5. The horizontal axis represents the D/U ratio, and the vertical axis represents the characteristic of the rectified output of the rectifying circuit 10 with respect to the D/U ratio in Fig. 6. A curved line L1 (without notch) shown in the figure is equivalent to the curved line K1 representing the characteristic of the rectified output without the IF notch-filter 11, i.e., the characteristic of the rectified output according to the first embodiment. Another curved line L2 (with notch) represents the characteristic of the rectified output with the IF notch-filter 11 according to the present embodiment.

Given below is a description about comparison of L1, which represents the characteristic of the rectified output without the IF notch-filter 11, and L2, which represents the characteristic of the rectified output with the IF notch-filter 11. Although, in the procedure shown in Fig. 4, when the rectified output is larger than the second threshold (TH_2), the wide-bandpass filter is selected, it is examined that the filter selection is expanded to two-step process at this selection stage procedure. With respect to L1, i.e., the characteristic of the rectified output without the IF notch-filter 11, a level of the rectified output corresponding to the D/U ratio of "P3", that is appropriate for a new switching level, is "TH_3'". A difference between the second threshold (TH_2) and the third threshold (TH_3') i.e., the new threshold in the rectified output characteristic L1, is small, and moreover there is a noise in the rectified output. Therefore, it is difficult to perform determination.

With respect L2, i.e., the characteristic of the rectified output with the IF notch-filter 11, a level of the rectified output corresponding to the D/U ratio of "P3", that is appropriate for a new switching level, is "TH_3". A difference between the second threshold (TH_2) and the third threshold (TH_3), i.e., the new threshold in the rectified output characteristic L2 is large enough to perform determination even when a noise in the rectified output is considered.

A filter switching process in a case having such a threshold is described below. With respect to L2 in the figure, the filter characteristic show a change at around the D/U ratio of "P1" (where P1 is a positive real value). The filter characteristic show another change at around the D/U ratio of "P2" (where P1 is a positive real value that satisfies P2>P1). The filter characteristic show still another change at around the D/U ratio of "P3" (where P1 is a positive real value that satisfies P3>P2).

The threshold used in a control performed by the comparing controlling unit 6 is not the D/U ratio but the rectified output of the rectifying circuit 10 indicative of the D/U ratio, in the same manner as in the threshold according to the first embodiment. More specifically, the threshold determination is performed by using the rectified output "TH_1", which corresponds to the D/U ratio "P1", the rectified output "TH_2", which corresponds to the D/U ratio "P2", and the rectified output "TH_3", which corresponds to the D/U ratio "P3" as the threshold. A filter-selection control signal is generated based on the threshold determination, and the filter characteristic of the IF filter 4 is selected based on the filter-selection signal 7.

In the broadcast receiving device including the undesired-wave signal control unit according to the second embodiment, because the IF output of the front-end unit 2 is sent to the IF limiter 8 via the IF notch-filter 11, and output of the IF limiter 8 is sent to the rectifying circuit 10 via the adjacent-frequency extracting BPF 9, it is possible to take advantage of the capture effect obtained by the IF limiter 8. This is why the rectified output of the rectifying circuit 10 represents the undesired-wave signal indicative of the D/U ratio of the signal wave to the undesired-wave signal contained in the IF signal.

By inserting the IF notch-filter 11 when the D/U ratio is comparatively large, it is possible to delay the rectified output of the rectifying circuit 10. This makes it possible to perform fine filter control covering a higher range of the D/U ratio. As a result, it is possible to perform filter control performed by the IF filter 4 covering a wide-range D/U ratio. Moreover, because it is not take the structure having a plurality of narrow-bandpass filters in the second embodiment, neither is in the first embodiment, it is possible to form the simple structure (equivalent structure) of obtaining the D/U ratio.

According to the present embodiment, a process of detecting interference is performed in an IF bandwidth. However, it is possible to perform the above-described processes in any bandwidth other than the IF bandwidth by using the IF notch-filter 11 and the IF limiter 8 appropriate for a target bandwidth such as an RF bandwidth or a baseband bandwidth.

Moreover, the IF filter 4 in the present embodiment can be either a digital filter or an analog filter. The important point is that an appropriate filter characteristic of the IF filter 4 is controlled based on the output of the comparing controlling unit 6.

Furthermore, although it is described while assuming that the process performed by the D/U-ratio output unit 5 is an analog process, the process can be performed as digital processing. When the process is performed as digital processing, A/D converted output, which is generated by converting IF output of the front-end unit 2 into an A/D signal, is sent to the D/U-ratio output unit 5.

As set forth hereinabove, according to the present embodiment, because there are provided a front-end unit that converts a desired-wave signal, which is a signal coming from a target broadcast station, to a signal having a frequency in a predetermined frequency bandwidth; an undesired-wave signal control unit that extracts signal characteristics of the desired-wave signal and signal characteristics of an undesired-wave signal that is present near the desired-wave signal from an output signal of the front-end unit, and generates a predetermined control signal based on the signal characteristics, and outputs the control signal; and a filter unit that filters the output signal of the front-end unit by using a predetermined bandpass filter, and outputs filtered signal, wherein the undesired-wave signal control unit includes a D/U-ratio output unit that generates a signal indicative of a ratio of intensities of the desired-wave signal to the undesired-wave signal from an output signal containing the desired-wave signal and the undesired-wave signal, and outputs generated signal; and a comparing controlling unit that outputs a comparison result indicative of a comparison of output of the D/U-ratio output unit with a threshold as the control signal, the D/U-ratio output unit includes an amplitude limiting circuit that limits amplitude of an input signal, and the D/U-ratio output unit includes a band-pass attenuating filter on an input side of the amplitude limiting circuit, it is possible to form the structure that can remove the adjacent undesired-wave signal even when the D/U ratio varies in a wide range. Moreover, it helps in producing a device having a not-complicated structure with lower costs by using such structure.

## Claims

1. An interference detecting device comprising:
a D/U-ratio output unit that generates a signal indicative of a ratio of intensities of a desired-wave signal to an undesired-wave signal from a signal output containing the desired-wave signal and the undesired-wave signal, and outputs generated signal; and
a comparing controlling unit that outputs a comparison result indicative of a comparison of output of the D/U-ratio output unit with a threshold, wherein
the D/U-ratio output unit includes an amplitude limiting circuit that limits amplitude of an input signal.

2. The interference detecting device according to claim 1, wherein the D/U-ratio output unit includes a band-pass attenuating filter on an input side of the amplitude limiting circuit, wherein the band-pass attenuating filter attenuates components of the desired-wave signal contained in the input signal.

3. A broadcast receiving device comprising:
a front-end unit that converts a desired-wave signal, which is a signal coming from a target broadcast station, to a signal having a frequency in a predetermined frequency bandwidth;
an undesired-wave signal control unit that extracts signal characteristics of the desired-wave signal and signal characteristics of an undesired-wave signal that is present near the desired-wave signal from an output signal of the front-end unit, and generates a predetermined control signal based on the signal characteristics, and outputs the control signal; and
a filter unit that filters the output signal of the front-end unit by using a predetermined bandpass filter, and outputs filtered signal, wherein
the undesired-wave signal control unit includes
a D/U-ratio output unit that generates a signal indicative of a ratio of intensities of the desired-wave signal to the undesired-wave signal from an output signal containing the desired-wave signal and the undesired-wave signal, and outputs generated signal; and
a comparing controlling unit that outputs a comparison result indicative of a comparison of output of the D/U-ratio output unit with a threshold as the control signal, wherein
the D/U-ratio output unit includes an amplitude limiting circuit that limits amplitude of an input signal.

4. The broadcast receiving device according to claim 3, wherein the D/U-ratio output unit includes a band-pass attenuating filter on an input side of the amplitude limiting circuit, wherein the band-pass attenuating filter attenuates components of the desired-wave signal contained in the input signal.

5. An interference detecting method comprising:
a limited-amplitude generating and outputting step of generating limited-amplitude output by limiting amplitude of an input signal containing a desired-wave signal and an undesired-wave signal, and outputting generated signal;
a D/U-ratio outputting step of generating a signal indicative of a ratio of intensities of the desired-wave signal to the undesired-wave signal from signal output at the limited-amplitude generating and outputting step, and outputting generated signal; and
a comparing step of outputting a comparison result indicative of a comparison of output at the D/U-ratio outputting step with a threshold.

6. The interference detecting method according to claim 5, further comprising:
a desired-wave signal component attenuating step of attenuating, by a predetermined amount, components of the desired-wave signal out of the input signal containing the desired-wave signal and the undesired-wave signal,
wherein the desired-wave signal component attenuating step is performed as a pre-process of the limited-amplitude generating and outputting step.
